# FASCICULE DE BREVET EUROPEEN

(11) **EP 2 466 528 B1**
(45) Date de publication et mention de la délivrance du brevet: **10.07.2013**
(21) Numéro de dépôt: 11193003.8
(22) Date de dépôt: 12.12.2011
(51) Int. Cl.: G06K 19/073

(54) **Sécurisation de l'alimentation de moyens de commande d'une carte à microcircuit en cas d'attaque**
Sicherung der Einspeisung der Steuerungsmittel einer Mikrochipkarte im Fall eines Angriffs
Securitisation of the supply of a control means of a chip card in the event of attack

(30) Priorité: 14.12.2010 FR 1060465
(43) Date de publication de la demande: 20.06.2012
(73) Titulaire: Oberthur Technologies, 92300 Levallois Perret (FR)
(72) Inventeur: Morin, Nicolas, 92000 Nanterre (FR); Giraud, Christophe, 92000 Nanterre (FR)
(74) Mandataire: Delumeau, François Guy

(56) Documents cités:
- EP-A1- 2 164 031
- EP-A2- 1 113 386

## Description

### Arrière-plan de l'invention

La présente invention se situe dans le domaine de la protection des modules électroniques.

Elle s'applique de façon privilégiée mais non limitative pour la protection d'une carte à microcircuit, par exemple conforme à la norme ISO 7816.

Dans le cadre de la protection des cartes à microcircuit contre les attaques par injection de faute, une contre-mesure connue consiste à écrire une valeur prédéterminée dans une zone réservée d'une mémoire non volatile de la carte lorsqu'une perturbation est détectée, le contenu de cette zone étant vérifié par la carte au début de chaque commande ; lorsque ce contenu est égal à la valeur prédéterminée précitée, la carte refuse d'exécuter la commande, et la carte devient inutilisable. Une telle carte est connue de EP-A-2 164 031.

De façon connue, une écriture en mémoire non volatile est obligatoirement précédée du chargement d'une pompe de charge, ce qui implique une hausse très sensible de la consommation de courant de la carte.

Cette subite variation peut être observée par analyse SPA (Simple Power Analysis), en utilisant une résistance en série avec la carte.

Il est donc possible, pour un attaquant disposant d'un module de détection de chargement de la pompe de charge, de contourner la contre-mesure précédemment décrite en coupant immédiatement l'alimentation de la carte pour éviter l'écriture de la valeur prédéterminée dans la zone, lorsqu'il détecte une hausse de la consommation inhabituelle en fonctionnement normal et donc représentative du fait que la carte essaye de se rendre inopérante.

L'invention offre une solution à ce problème.

### Objet et résumé de l'invention

Plus précisément, l'invention concerne un module comportant :
- des moyens pour détecter une attaque sur ce module ; et
- des moyens de commande aptes à charger une pompe de charge apte à appliquer une tension programmation pour commander une écriture dans une cellule d'une mémoire non volatile lorsqu'une attaque est détectée ; ledit module étant caractérisé en ce que
- un condensateur est agencé pour être alimenté en fonctionnement normal et pour alimenter la pompe de charge uniquement lorsqu'une attaque est détectée; et en ce que ledit

condensateur alimente également les moyens de commande lorsqu'une attaque est détectée.

Conformément à l'invention, et de façon très avantageuse, la décharge du condensateur n'est pas détectable par analyse de la consommation de la carte à microcircuit.

Par ailleurs, du fait que le condensateur alimente également les moyens de commande lorsque l'attaque est détectée, une attaque visant à couper l'alimentation de la carte à microcircuit serait inopérante.

Dans un mode particulier de réalisation de l'invention, les moyens de commande comportent une bascule et une porte inverseuse, la sortie de la bascule étant à un premier niveau en fonctionnement normal et à un deuxième niveau lorsqu'une attaque est détectée.

La cellule de la mémoire non volatile peut être une cellule programmable une seule fois (cellule OTP) ou la cellule d'une mémoire EEPROM.

Dans un mode particulier de réalisation de l'invention, le module comporte un signal de contrôle dont le niveau est représentatif de l'état écrit ou vierge de la cellule EEPROM, ce signal de contrôle étant utilisé pour coller un signal vital du module lorsqu'une attaque est détectée.

Ce signal vital peut être choisi parmi un signal de réinitialisation, un signal d'horloge, ou un signal d'entrée/sortie en liaison avec un équipement externe au module.

Dans un autre mode de réalisation, le signal de contrôle est utilisé pour commander un interrupteur contrôlant l'alimentation d'un composant vital du module.

Ce composant vital peut être par exemple constitué par un processeur.

L'interrupteur peut être un transistor PMOS.

Dans un mode particulier de réalisation de l'invention, le module est une carte à microcircuit conforme à la norme ISO 7816.

### Brève description des dessins

D'autres caractéristiques et avantages de la présente invention ressortiront de la description faite ci-dessous en référence aux dessins annexés qui en illustrent trois exemples de réalisation dépourvus de tout caractère limitatif.

### Description détaillée de l'invention

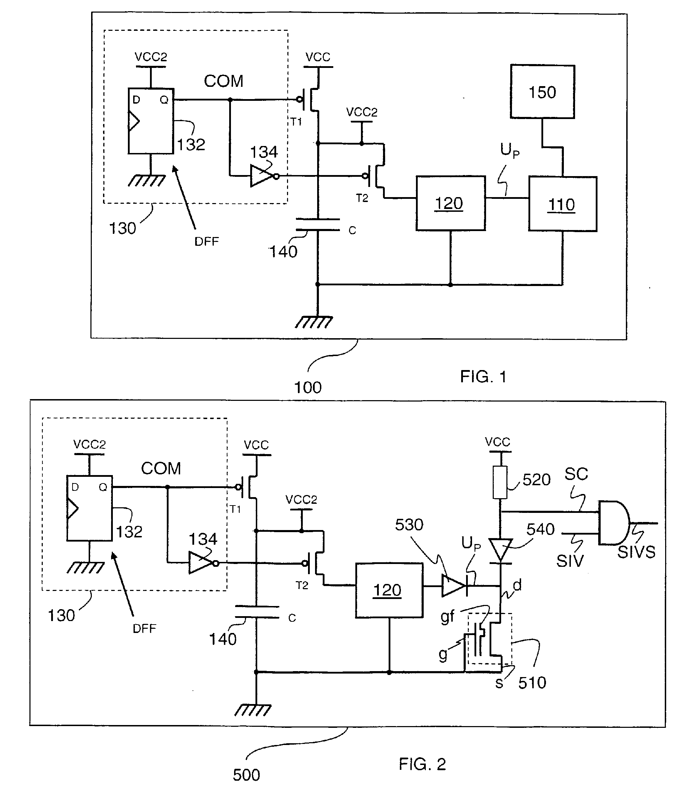

La **figure 1** représente un module 100 conforme à un premier mode de réalisation de l'invention.

Ce module est constitué dans cet exemple par une carte à microcircuit conforme à la norme ISO 7816.

Cette carte à microcircuit comporte une mémoire non volatile, constituée par une cellule 110, cette cellule n'étant programmable qu'une seule fois. Ce type de cellule est connu de l'homme du métier sous le nom cellule OTP (One Time Programmable).

Conformément à l'invention, la cellule OTP 110 est destinée à être modifiée pour mémoriser une variable représentative de la détection d'une attaque malveillante sur la carte à microcircuit 100. Une telle attaque peut par exemple être détectée en réalisant deux fois une opération et en comparant les sorties correspondantes, mais la détection de l'attaque à proprement parler n'est pas l'objet de l'invention.

De façon connue, la carte à microcircuit 100 comporte une pompe de charge 120 mise en oeuvre pour écrire une valeur dans la cellule OTP 110, toute écriture dans une mémoire non volatile étant précédée du chargement de la pompe de charge 120, pour appliquer une tension de programmation UP à la cellule, ce qui implique une hausse très sensible de la consommation de courant dans la carte à microcircuit.

Cette subite variation peut par exemple être observée par analyse SPA (Simple Power Analysis) par exemple, en plaçant une résistance en série avec la carte à microcircuit 100.

La carte à microcircuit 100 comporte des moyens 130 pour commander l'écriture d'une variable dans la cellule OTP 110. Plus précisément, ces moyens génèrent une commande COM à un premier niveau en fonctionnement normal (niveau bas NB) et à un deuxième niveau lorsqu'une attaque est détectée (niveau haut NH).

Dans le mode de réalisation décrit ici ces moyens de commande comportent une bascule D 132 et une porte inverseuse 134. La bascule D 132 correspond à un bit qui commande l'écriture dans la cellule OTP 110.

Autrement dit, dans cet exemple, la détection d'une attaque se traduit par le basculement de la sortie de la bascule D 132 du niveau bas (NB) au niveau haut (NH).

Conformément à l'invention, la carte à microcircuit comporte un condensateur 140 alimenté en fonctionnement normal par une tension VCC.

Dans le mode de réalisation décrit ici, une borne du condensateur 140 est reliée à un interrupteur T1 passant en fonctionnement normal, de sorte à pouvoir charger le condensateur. Cet interrupteur T1 est constitué par un transistor PMOS relié directement à la sortie de la bascule D 132, au niveau bas (NB) en fonctionnement normal.

La pompe de charge 120 est également contrôlée par les moyens de commande 130, les moyens de commande 130 empêchant l'alimentation de la pompe de charge en fonctionnement normal.

Plus précisément, dans l'exemple de réalisation décrit ici, une borne de la pompe de charge 120 est reliée à un interrupteur T2 bloquant en fonctionnement normal. Cet interrupteur T2 est constitué par un transistor PMOS relié, par une porte inverseuse 134, à la sortie de la bascule D 132.

Conformément à l'invention, le condensateur 140 est adapté à alimenter la pompe de charge 120 uniquement lorsqu'une attaque est détectée. Dans le mode de réalisation décrit ici, une borne du condensateur 140 est reliée à l'interrupteur T2.

Lorsqu'une attaque est détectée, la sortie de la bascule D 132 passe au niveau haut (NH) ce qui entraîne le déblocage de l'interrupteur T2, la charge de la pompe 120 par le condensateur 140 et une écriture dans la cellule OTP 110.

Dans le mode de réalisation décrit ici, un processeur 150 de la carte à microcircuit surveille (polling, interruption, ...) de façon logicielle le contenu de la cellule OTP afin d'entreprendre une action de réponse à l'attaque, cette action ne faisant pas partie de l'invention.

De façon connue, il est nécessaire pour la bonne écriture dans le registre 110, que la sortie de la bascule D reste au niveau haut (NH) pendant toute l'écriture.

Or, il est possible, pour un attaquant, par exemple par analyse EMA, (Electromagnetic Analysis) de détecter le début de la décharge du condensateur 140 dans la pompe de charge 120 et de couper l'alimentation de la carte à microcircuit 100 afin de perturber la sortie de la bascule D et donc l'écriture dans la cellule OTP 110.

L'invention résout ce problème en alimentant aussi les moyens de commande 130 par le condensateur 140.

Grâce à l'invention, et de façon très avantageuse, la décharge du condensateur 140 n'est pas détectable par analyse de la consommation de la carte à microcircuit.

Par conséquent, dans le mode de réalisation décrit ici, le condensateur 140 alimente la bascule D 132 et la porte inverseuse 134.

La bascule 132 peut être écrite par le processeur 150 ou par un autre composant matériel.

Dans une variante non représentée, cette bascule peut être un bit d'un registre spécifique du processeur 150.

La **figure 2** représente une carte à microcircuit 500 conforme à un autre mode de réalisation de l'invention.

Sur cette figure, les éléments de la carte à microcircuit 500 semblables à ceux de la carte à microcircuit 100 de la figure 1 portent les mêmes références.

Dans ce mode de réalisation, la mémoire non volatile de la carte à microcircuit 500 est une cellule EEPROM 510 ; le principe de ce mode de réalisation est de provoquer une écriture dans la cellule EEPROM 510 par alimentation de la pompe à charge 120 lorsqu'une attaque est détectée, et de basculer un signal de contrôle SC, au niveau haut NH en mode normal, vers le niveau bas NB lorsqu'une écriture dans la mémoire EEPROM est réalisée.

Dans le mode de réalisation décrit ici, le signal de contrôle SC est utilisé pour coller un signal vital SIV de la carte à microcircuit 500 lorsqu'une attaque est détectée par combinaison de ces signaux SC, SIV au moyen d'une porte ET.

Ce signal vital SIV peut par exemple être choisi parmi un signal de réinitialisation (RESET), un signal d'horloge (CLOCK), ou un signal d'entrée/sortie (I/O) en liaison avec un lecteur de ladite carte à microcircuit.

Le signal SIVS résultat de ce ET logique est un signal vital sécurisé par l'invention.

Dans le mode de réalisation décrit ici, le drain d de la cellule EEPROM est connecté à la sortie de la pompe à charge 120 et au signal de contrôle SC, de sorte que le niveau du signal de contrôle SC est représentatif de l'état écrit ou vierge de la cellule EEPROM 510.

En fonctionnement normal, la cellule EEPROM 510 est vierge et présente une haute impédance entre sa source s et son drain d, la grille étant reliée à la masse. Elle se comporte comme un interrupteur ouvert ; elle n'est traversée par aucun courant.

Une résistance 520, dont une première borne est reliée à la tension VCC et dont l'autre borne est reliée au drain d permet de maintenir le signal SC à un niveau haut.

Dans ce mode de fonctionnement normal, la pompe à charge 120 est protégée par une première diode 530 placée en sa sortie.

Lorsqu'une attaque est détectée par les moyens 130, l'interrupteur T2 devient passant et la pompe de charge 120 envoie une tension de programmation UP (par exemple de l'ordre de 15 V) sur le drain d de la cellule EEPROM 150.

De façon connue, la grille flottante gf de l'EEPROM 150 se charge alors positivement ; une écriture est réalisée dans l'EEPROM 150 ce qui provoque une chute de la tension de seuil (entre la grille et la source) qui devient négative.

Il est important de noter, que pendant toute la durée de l'écriture, la tension de programmation UP est supérieure à VCC. Afin de maintenir le signal de contrôle SC au niveau VCC et non au niveau UP pendant toute la durée de l'écriture, la carte à microcircuit 500 comporte une deuxième diode 540 placée en série entre le drain d de l'EEPROM 510 et la résistance 520 tirant le signal de contrôle SC.

Cette deuxième diode 540 évite de connecter la sortie de la pompe à charge 120 avec le signal de contrôle SC afin de protéger la logique se trouvant derrière ce signal.

Une fois l'écriture de l'EEPROM terminée, celle-ci devient passante (la tension entre la grille et la source qui est de 0V devient supérieur à la tension de seuil), l'impédance entre la source s et le drain d étant faible devant la résistance 520.

Par conséquent, le signal de contrôle SC passe au niveau bas et l'attaque peut être détectée par une logique surveillant ce niveau.

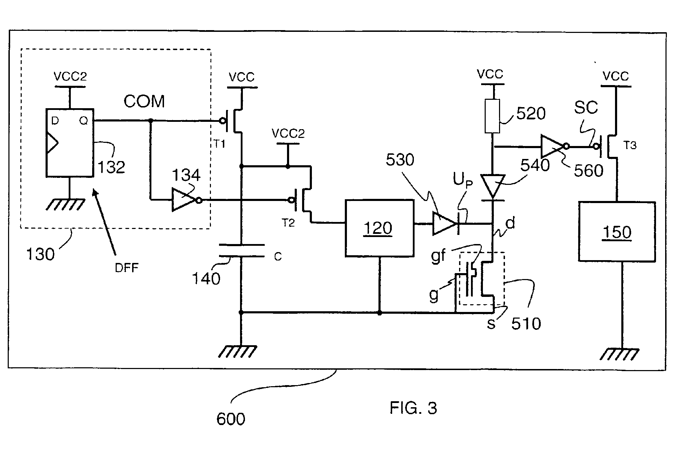

La **figure 3** représente une carte à microcircuit 600 conforme à un autre mode de réalisation de l'invention.

Sur cette figure, les éléments de la carte à microcircuit 600 semblables à ceux de la carte à microcircuit 500 de la figure 2 portent les mêmes références.

Dans ce mode de réalisation, la carte à microcircuit 600 comporte une porte inverseuse 560 pour produire un signal de contrôle SC complémentaire de celui de la figure 2.

Autrement dit, dans ce mode de réalisation, le signal de contrôle SC est à un niveau bas (NB) en fonctionnement normal, et à un niveau haut (NH) en cas de détection d'une attaque.

Ce signal de contrôle SC commande un interrupteur apte à couper l'alimentation d'un composant vital de la carte, à savoir dans cet exemple, celle d'un processeur 150.

Dans l'exemple de réalisation décrit ici, cet interrupteur est constitué par un transistor PMOS T3.

Plus précisément, dans le mode de réalisation de la figure 3, la carte à microcircuit 600 comporte un transistor T3 contrôlé par le signal de contrôle SC de sorte que :
- en fonctionnement normal, le signal de contrôle SC est à un niveau bas, et le CPU 150 est alimenté par la tension VCC ; et
- en cas de détection d'attaque, le signal de contrôle SC passe à un niveau haut, et le CPU 150 n'est plus alimenté.

## Revendications

1. Module (100, 500, 600) comportant :
- des moyens pour détecter une attaque sur ledit module ; et
- des moyens de commande (130) aptes à charger une pompe de charge (120) apte à appliquer une tension de programmation (UP) pour commander une écriture dans une cellule (110, 510) d'une mémoire non volatile lorsqu'une attaque est détectée ; ledit module (100, 500) étant **caractérisé en ce que**
- un condensateur (140) est agencé pour être alimenté en fonctionnement normal et pour alimenter ladite pompe de charge (120) uniquement lorsqu'une attaque est détectée ; et **en ce que**
ledit condensateur (140) alimente également lesdits moyens de commande (130) lorsqu'une attaque est détectée.

2. Module (100, 500, 600) selon la revendication 1, **caractérisé en ce que** lesdits moyens de commande (130) comportent une bascule (132) et une porte inverseuse (134), la sortie de la bascule étant à un premier niveau en fonctionnement normal et à un deuxième niveau lorsqu'une attaque est détectée, ledit deuxième niveau restant à l'état haut pendant toute la durée de ladite écriture.

3. Module (100) selon la revendication 1 ou 2, **caractérisé en ce que** ladite cellule (110) est une cellule (OTP) programmable une seule fois.

4. Module (500, 600) selon la revendication 1 ou 2, **caractérisé en ce que** ladite cellule (510) est une cellule d'une mémoire EEPROM.

5. Module (500) selon la revendication 4 **caractérisé en ce qu'**il comporte un signal de contrôle (SC) dont le niveau (NH, NB) est représentatif de l'état écrit ou vierge de ladite cellule (510), ce signal de contrôle (SC) étant utilisé pour coller un signal vital (SIV) dudit module (500) lorsqu'une attaque a été détectée.

6. Module (500) selon la revendication 5, **caractérisée en ce que** ledit signal vital (SIV) est choisi parmi un signal de réinitialisation, un signal d'horloge, ou un signal d'entrée/sortie en liaison avec un équipement externe audit module (500).

7. Module (600) selon la revendication 4, **caractérisé en ce qu'**il comporte un signal de contrôle (SC) dont le niveau (NH, NB) est représentatif de l'état écrit ou vierge de ladite cellule (510), ce signal de contrôle (SC) étant utilisé pour commander un interrupteur (T3) contrôlant l'alimentation d'un composant vital (150) dudit module.

8. Module (600) selon la revendication 7, **caractérisé en ce que** ledit interrupteur (T3) est un transistor PMOS.

9. Module (600) selon la revendication 7 ou 8, **caractérisé en ce que** ledit composant vital est un processeur (150).

10. Module (100, 500, 600) selon l'une quelconque des revendications 1 à 9 constitué par une carte à microcircuit conforme à la norme ISO 7816.

## Patentansprüche

1. Modul (100, 500, 600), umfassend:
- Mittel zum Erfassen eines Angriffs auf das Modul und
- Steuermittel (130), die geeignet sind, eine Ladungspumpe (120) zu laden, welche geeignet ist, eine Programmierspannung (UP) zum Steuern eines Schreibens in eine Zelle (110, 510) eines nicht flüchtigen Speichers anzulegen, wenn ein Angriff erfaßt wird,
wobei das Modul (100, 500) **dadurch gekennzeichnet ist, daß**
ein Kondensator (140) angeordnet ist, um im Normalbetrieb gespeist zu werden und um die Ladungspumpe (120) lediglich dann zu versorgen, wenn ein Angriff erfaßt wird, und daß
der Kondensator (140) auch die Steuermittel (130) versorgt, wenn ein Angriff erfaßt wird.

2. Modul (100, 500, 600) nach Anspruch 1, **dadurch gekennzeichnet, daß** die Steuermittel (130) eine Kippschaltung (132) und ein NICHT-Glied (134) umfassen, wobei der Ausgang der Kippschaltung sich im Normalbetrieb auf einem ersten Niveau und, wenn ein Angriff erfaßt wird, auf einem zweiten Niveau befindet, wobei das zweite Niveau während der gesamten Dauer des Schreibens in dem höheren Zustand bleibt.

3. Modul (100) nach Anspruch 1 oder 2, **dadurch gekennzeichnet, daß** die Zelle (110) eine ein einziges Mal programmierbare Zelle (OTP) ist.

4. Modul (500, 600) nach Anspruch 1 oder 2, **dadurch gekennzeichnet, daß** die Zelle (510) eine Zelle eines EEPROM-Speichers ist.

5. Modul (500) nach Anspruch 4, **dadurch gekennzeichnet, daß** es ein Steuersignal (SC) umfaßt, dessen Niveau (NH, NB) für den beschriebenen Zustand oder Leerzustand der Zelle (510) repräsentativ ist, wobei dieses Steuersignal (SC) verwendet wird, um ein Lebenssignal (SIV) des Moduls (500) aufzudrücken, wenn ein Angriff erfaßt worden ist.

6. Modul (500) nach Anspruch 5, **dadurch gekennzeichnet, daß** das Lebenssignal (SIV) aus einem Reset-Signal, einem Taktsignal oder einem Eingangs-/Ausgangssignal in Verbindung mit einer außerhalb des Moduls (500) befindlichen Einrichtung ausgewählt ist.

7. Modul (600) nach Anspruch 4, **dadurch gekennzeichnet, daß** es ein Steuersignal (SC) umfaßt, dessen Niveau (NH, NB) für den beschriebenen Zustand oder Leerzustand der Zelle (510) repräsentativ ist, wobei dieses Steuersignal (SC) verwendet wird, um einen Schalter (T3) zu steuern, der die Versorgung eines Lebensbauelements (150) des Moduls steuert.

8. Modul (600) nach Anspruch 7, **dadurch gekennzeichnet, daß** der Schalter (T3) ein PMOS-Transistor ist.

9. Modul (600) nach Anspruch 7 oder 8, **dadurch gekennzeichnet, daß** das Lebensbauelement ein Prozessor (150) ist.

10. Modul (100, 500, 600) nach einem der Ansprüche 1 bis 9, das von einer Mikrochipkarte gemäß ISO-Norm 7816 gebildet ist.

## Claims

1. A module (100, 500, 600), including:
- means for detecting an attack on said module; and
- command means (130) capable of charging a charge pump (120) able to apply a programming voltage (UP) to command a write operation into a cell (110, 510) of a nonvolatile memory when an attack is detected; said module (100, 500) being **characterized in that**
- a capacitor (140) is arranged to be supplied with power during normal operation and to supply said charge pump (120) only when an attack is detected; and **characterized in that**
said capacitor (140) also supplies said command means (130) when an attack is detected.

2. A module (100, 500, 600) according to Claim 1, **characterized in that** said command means (130) include a flip-flop (132) and a NOT gate (134), the output of the flip-flop being at a first level during normal operation and at a second level when an attack is detected, said second level remaining high during the entire duration of said write operation.

3. A module (100) according to Claim 1 or 2, **characterized in that** said cell (110) is a one time programmable cell (OTP).

4. A module (500, 600) according to Claim 1 or 2, **characterized in that** said cell (510) is a cell of an EEPROM memory.

5. A module (500) according to Claim 4, **characterized in that** it includes a control signal (SC) the level (NH, NB) whereof is representative of the written or blank state of said cell (510), this control signal (SC) being used to maintain a vital signal (SIV) of said module (500) when an attack has been detected.

6. A module (500) according to Claim 5, **characterized in that** said vital signal (SIV) is selected from among a reset signal, a clock signal or an input/output signal connected with equipment external to said module (500).

7. A module (600) according to Claim 4, **characterized in that** it includes a control signal (SC) the level (NH, NB) whereof is representative of the written or blank state of said cell (510), this control signal (SC) being used to command a switch (T3) controlling the power supply to a vital component (150) of said module.

8. A module (600) according to Claim 7, **characterized in that** said switch (T3) is a PMOS transistor.

9. A module (600) according to Claim 7 or 8, **characterized in that** said vital component is a processor (150).

10. A module (100, 500, 600) according to any one of Claims 1 to 9, consisting of a microcircuit card complying with the ISO 7816 standard.
